# EUROPEAN PATENT SPECIFICATION

(11) **EP 2 572 068 B1**
(45) Date of publication and mention of the grant of the patent: **17.12.2014**
(21) Application number: 11726167.7
(22) Date of filing: 18.04.2011
(51) Int. Cl.: E06B 3/263, E06B 3/30

(54) **EXTERNAL LAYER OF COMPOUND FRAMES FOR WINDOWS AND DOORS**
VERBUNDRAHMENAUSSENSCHICHT FÜR FENSTER UND TÜREN
COUCHE EXTERNE DE CADRES COMPOSÉS POUR FENÊTRES ET PORTES

(30) Priority: 20.05.2010 HR 20100280
(43) Date of publication of application: 27.03.2013
(73) Proprietor: TROHA-DIL d.o.o., 43000 Bjelovar (HR)
(72) Inventor: KLASAN, Dinko, 43000 Bjelovar (HR)
(74) Representative: Bihar, Zeljko
(86) International application number: PCT/HR2011/000016
(87) International publication number: WO 2011/144952

(56) References cited:
- WO-A1-2009/040589
- AT-A1- 506 611
- AT-B- 409 997
- DE-C1- 10 100 101
- DE-U1- 29 817 693
- FR-A1- 2 234 433

## Description

### TECHNICAL FIELDS

The invention relates to the field of fixed frames, as well as to movable and fixed frames of wings for windows and doors, composed of several parts made of different materials. The subject matter of the invention is the construction of the external layer of the fixed frame and the external layer of the movable frame of wings for windows and doors, to be fixed to base carrier frames protecting such base carrier frames and glass surfaces against weather conditions.

According to the seventh edition of the International Patent Classification the invention relates to the technical fields designated by the following symbols: E06B1/32 - Frames for doors, windows or the like to be fixed in openings and composed of parts made of different materials,
E06B1/34 - Coverings for fixed frames, e.g. protecting against weather, for decorative purposes,
E06B3/26 - Compound frames, i.e. one frame within or behind another for window sashes or door leaves,
E06B3/263 - Frames for window sashes or door leaves with special provision for insulation,
E06B3/30 - Coverings for frames for window sashes or door leaves e.g. protecting against weather or for decorative purposes.

### TECHNICAL PROBLEM

Compound fixed and movable frames of wings for doors and windows are composed of several interconnected layers, made of different materials. The internal base carrier layers made of wood, metal or nonmetal, such as polymer materials, play the role of frame carriers, loaded mainly with static and dynamic strains. The external layer of the frame exposed to thermal, light and weather influences protects the frame against all the mentioned influences in order to provide it with better thermo-dynamic properties and functionality, as well as durability and attractive appearance. Therefore, the external layer of a frame is usually made of aluminum profiles, filled with foamy materials. Due to different mechanical and chemical characteristics of materials of which internal and external layers of compound frames are made, a special technical problem is the connection thereof. Taking into consideration a growing need for energy saving in the building industry, special problems are thermal bridges created on compound frames, and allowing an intensive loss of thermal energy. The invention solves the technical problem of manufacturing the external layers of frames made of aluminum profiles, filled with foamy material and connecting them to the internal base carrier layers, as well as of the creation of thermal bridges.

### THE STATE OF THE ART

Patent document No. EP1178177B1 describes embodiments of a compound fixed frame and a compound frame of wings for windows made of wooden frames and aluminum profiles, filled with insulation foam. External layers made of aluminum profiles, filled with insulation foam are fastened to wooden frames in the way that insulation fillings are stuck directly to wooden frames or are fixed to them by means of snap joints.

Patent document No. EP1221525B1 describes embodiments of a compound fixed frame and a compound frame of wings for windows made of wooden frames and aluminum profiles, filled with insulation foam. External layers made of aluminum profiles, filled with insulation foam are fastened to wooden frames by means of guides, pressed in insulation filling, which are connected to T-shaped carriers fastened to wooden frames.

Patent document No. WO2009040589 describes embodiments of a compound fix frame and a compound frame of wings for windows and doors, made of wooden frames and aluminum profiles, filled with insulation foam. External layers consist of layers of polymer foamy material and aluminum covers, which are fastened to wooden frames by means of plastic bond elements. External ends of bond elements are connected to aluminum covers, and their internal ends are connected to wooden frames by means of screws.

### ESSENCE OF THE INVENTION

The compound frames according to the invention have their external layers made of insulation foam, which is, at its external side, covered by aluminum covers.

The external layer of the fixed frame is made of insulation foam of uniform density, and an aluminum cover, which is connected, on its upper side, by means of plastic profile, and on its lower side, by means of plastic bond elements, to the carrier part of the frame. Depending of the use of the fixed frame, the upper plastic profile may have on its upper side a groove for a lower gasket, or may be completely flat, without a groove for a gasket. Joints of the upper plastic profile and lower plastic bond elements with aluminum cover and the carrier part of the frame are made as snap joints. The upper part of the aluminum cover is bent inwards, and has on its top a groove to accept the upper gasket. A space bordered by the groove for the lower gasket, made on the upper plastic profile, by the external part of the plastic profile and by the upper part of the aluminum cover with the groove for the upper gasket is not filled with insulation foam. This air-space closed by the movable or by the fixed frame of wing forms, in terms of thermo-dynamics, an insulation layer, which serves, at the same time, as the canal for collecting and draining condensed water that has passed through the upper gasket. The condensed water is drained through openings in the upper part of the aluminum cover, without passing through insulation foam.

The external layer of the movable frame of the wing is made of insulation foam, the surface layer of which is of a higher density than is its internal part, which is of a lower density, and of the aluminum cover. The upper part of insulation foam is covered, on the outside, by the aluminum cover. Insulation foam is fastened, by means of adhesive, to the carrier part of the movable frame of wing and to the lower part of the window glass, whereas its aluminum cover is fastened by means of adhesive to its upper part.

The solutions according to the invention differ from the solutions mentioned in the state of the art by the embodiments of layers of insulation foam, aluminum covers, connecting elements, and the manner of fastening the external layers to the carrier parts of the frame. The external layer of the fixed frame according to the invention is not filled, in its entirety, with insulation foam, and contains a canal for collecting and draining condensed water through aluminum cover, and not through insulation foam, as is in the cited solutions. The use of insulation foam, featuring in two densities in the external layer of the frame of wing, has improved the thermo-insulation properties of frames and reduced the effects of thermal bridges.

### DESCRIPTION OF FIGURES

Figure 1 shows a characteristic cross section of one side of the fixed compound frame, and one side of the movable compound frame of a wing for windows and doors, having separate external layers fastened to their carrier parts.
Figure 2 shows a characteristic cross section of one side of the fixed compound frame, and one side of the fixed compound frame of a wing for windows and doors, having one common external layer fastened to the carrier part of the fixed compound frame.

### DESCRIPTION OF EMBODIMENTS AND APPLICATIONS

### Description of embodiments and applications of external layers of compound frames for windows and doors fastened to fixed frames

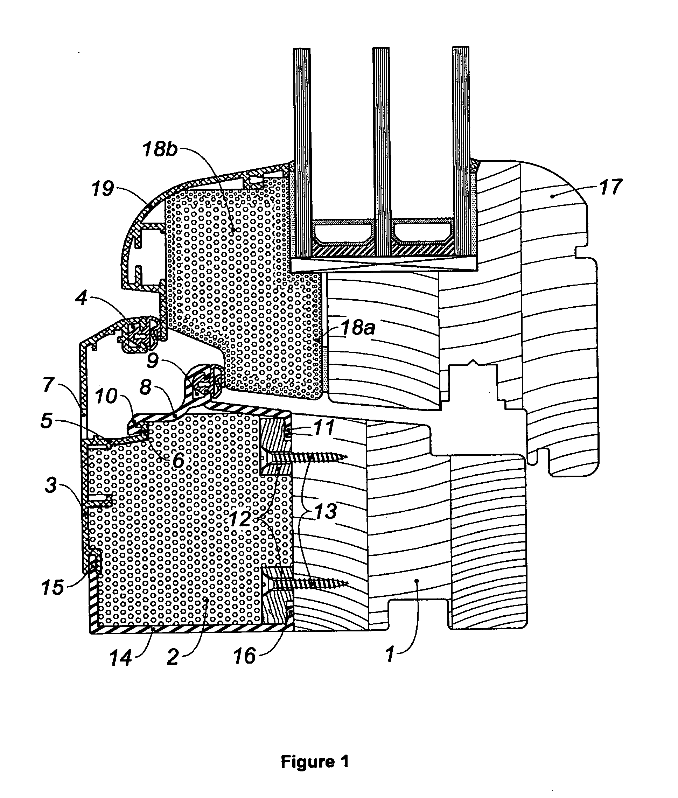

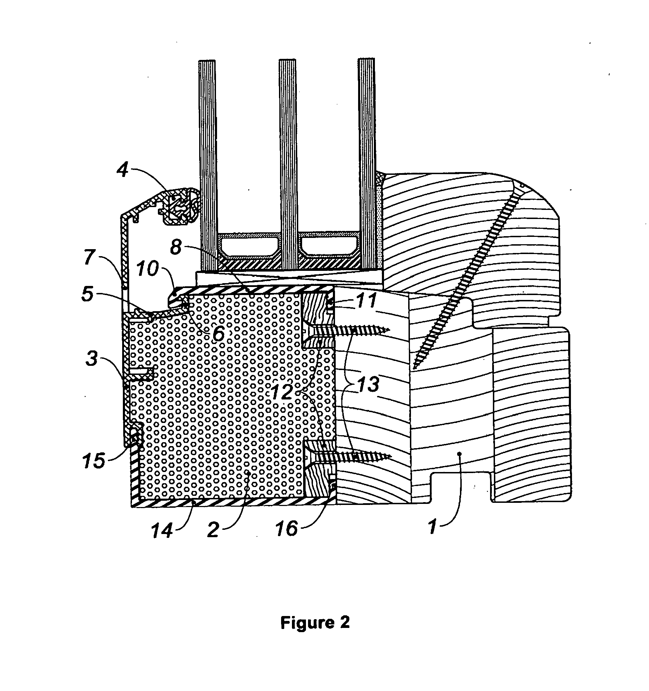

The embodiments of the external layers fastened to fixed frames are shown on the lower parts of Figures 1 and 2. Both of these embodiments have the same construction, but a different purpose.

The embodiment of the external layer, shown in Figure 1, is designed for a fixed frame in which a movable frame of a wing with external layer is to be fixed. The external layer of the fixed frame has, on its upper part, a connecting plastic profile with a groove for the lower gasket. The movable frame sits, with its external layer, on the upper and lower gaskets of the fixed frame. The embodiment of the external layer shown in Figure 2 is designed for the fixed frame in which the fixed frame of wing without an external layer is to be fixed. The external layer of the fixed frame has, on its upper side, a connecting plastic profile without a groove for the lower gasket. The carrier part of the fixed frame of wing is fixed, by means of screws, to the carrier part of the fixed frame, in the way that the external glass surface within the fixed frame of wing leans against the upper gasket of the fixed frame.

The fixed frame of wing consists of internal carrier part 1 and external layer. Internal carrier part 1 of the fixed frame is made of sides, which are made of one or more layers of mutually glued profiles of wood, metal, plastic or the combinations thereof, with pre-fabricated engaging surfaces.

A multipart external layer, consisting of insulation layer 2, of the approximately rectangular cross-section, made of polymer foamy material of a uniform density, such as polystyrene or polyurethane, and thin profiled aluminum cover 3, is fastened to the external surface of carrier part 1. Layer 2 is made by molding according to the profiles shown in Figures 1 and 2, and by cutting to the necessary length of the side of the fixed frame. The external surface of layer 2 is covered, along the whole length of the side of the fixed frame, by vertical aluminum cover 3, which has, on its lower end, a vertical teethed groove, and on its upper end, which is bent towards the frame, groove 4, having the form of the horizontally positioned letter T, with the opening facing the frame of wing, and accepting the upper gasket. On the internal surface of aluminum cover 3, in its upper half, horizontal arm 5 is made, which is slightly bent upwards and ends with hooked ending 6. Openings 7 for condensed water drainage are made above arm 5.

Layer 2, covered with aluminum cover 3, is fixed at its upper part to carrier part 1 of the fixed frame by means of plastic profile 8. Plastic profile 8 has, in its cross section, the form of a horizontal bar with the ends bent downwards for acceptance to aluminum cover 3, and carrier part 1 of the fixed frame. Plastic profile 8 has multiple purposes, serving as a connecting element, a lower gasket carrier, and as a part of the canal for condensed water. In the embodiment of the fixed frame in which a movable frame of wing is to be fixed, as shown in Figure 1, plastic profile 8 has, on its upper side, grove 9, having the form of horizontally positioned letter T, with the opening facing the frame of wing, or the form of letter T, turned around 180 degrees, with the opening facing upwards to accept the lower gasket. In the embodiment of the fixed frame in which a fixed frame of wing is to be fixed, as shown in Figure 2, plastic profile 8 is completely flat, and without a groove for a gasket. Plastic profile 8 ends, on its external side, with hooked ending 10, which is to be connected with hooked ending 6 of aluminum cover 3. Plastic profile 8 ends, on its internal side, with vertical teethed ending 11, as inserted in the upper groove, between upper bar 12 and carrier part 1 of the fixed frame.

Upper bar 12 and lower bar 12 made of wood or plastics, the cross-section of which is in the form of letter L, form, with carrier part 1 of the fixed frame, grooves for bond elements, along the whole length of its side, to which they are fastened by means of screws 13. Instead of bars 12, snaps 12 of the same materials may be used, and arranged in equal distances along the whole length of the side.

Layer 2 covered with aluminum cover 3 is fixed at its lower side to carrier part 1 of the fixed frame by means of several plastic bond elements 14, having the form of letter U, with uneven vertical arms, the tops of which are teethed. Bond elements 14 are positioned at the lower side of layer 2, in the way that teethed tops 15 of their external arms are inserted in the teethed groove, at the lower end of aluminum cover 3, whereas teethed tops 16 of their internal arms are inserted in the lower groove, between lower bar 12 and carrier part 1 of the fixed frame. Instead of bond elements 14, arranged in certain distances, plastic profile 14 may be used, which closes, by the whole length of its side, the lower side of the external layer of the fixed frame.

The process of mounting the external layer to carrier part 1 of the fixed frame is carried out in the way that the parts for the sides of the fixed frame are cut out from the prefabricated profiles for layer 2, aluminum cover 3 and plastic profile 8. The external layer of one side of the fixed frame is assembled in the way that upper bar 12 and lower bar 12, or, snaps 12, instead, are fastened to the external surface of carrier part 1 of the fixed frame by means of screws 13. The profiled part of layer 2 is inserted in the space between bars 12 or snaps 12. Aluminum profile 3 is put on the external surface of layer 2, in the way that its arm 5 lays on the upper surface of layer 2. Then, aluminum profile 3 is connected with carrier part 1 of the fixed frame by plastic profile 8, in the way that hooked ending 10 of plastic profile 8 is connected with hooked ending 6 of aluminum cover 3, and teethed ending 11 of plastic profile 8 is inserted in the upper groove between upper bar 12 or upper snaps 12 and carrier part 1 of the fixed frame. Plastic bond elements 14 or plastic profile 14 are put at the lower side of layer 2, in the way that their teethed tops 15 and 16 are inserted in the pertaining grooves. The upper gasket may be inserted in groove 4 of aluminum profile 3, and the lower gasket in groove 9 of plastic profile 8, either at the beginning of the mounting, or after cutting the parts of the frame or at the very end of the mounting.

Snap joints between the aluminum profile, plastic profile 8 and plastic bond elements 14 allow their mutual longitudinal dilatation shifts because of action of heat from the environment.

### Description of the embodiments and applications of the external layer of compound frame for windows and doors, fastened to the movable frame of wing

The embodiment of the external layer fastened to the movable frame of wing is shown in the upper part of Figure 1.

The movable frame of wing consists of internal carrier part 17 and external part.

Internal carrier part 17 of the movable frame of wing is made of sides that are made of one or more layers of mutually glued profiles made of wood, metal, plastics or the combinations thereof with pre-fabricated engaging surfaces. Insulation layer of polymer foamy material, such as polystyrene or polyurethane of non-uniform density is fastened by means of adhesive to the external surface of carrier part 17 of the movable frame of wing and to the lower part of the window glass that is inserted in the movable frame of wing. Surface layer 18a of the insulation layer has a higher density than its internal part 18b. The external surfaces of surface layer 18a are, due to their high density, sufficiently hard and firm, and serve as engaging surfaces for the lower gasket. The external surfaces of the insulation layer are covered, along the whole length of the side of the frame of wing with thin, rounded, profiled aluminum cover 19, which is fastened to these surfaces by means of permanently resilient adhesive. The lower part of aluminum cover 19 serves as an engaging surface for the upper gasket. Insulation layer 18a, 18b, of a dual density, is made by molding, according to the profile shown in Figure 1, and by cutting to the necessary length of the side of the wing frame. Thermo-insulation and mechanical properties of the external layer of the movable frame of wing with the described external layer are significantly improved in comparison to those of the known external layers of wings and doors.

Windows and doors with the described fixed frames and movable and fixed frames of wings in the assemblies as shown in Figures 1 and 2 have significantly better thermo-insulation and mechanical properties, as well as durability and functionality than those of the known solutions. The lines of intensive transfer of heat, the so-called "thermal bridges" passing through frames to their carrier parts 1 and 17, to aluminum covers 3 and 19 have substantially lower impact on the thermo-insulation properties of frames. The air space in the upper part of aluminum cover 3, closed by the movable or fixed frame of a wing, represents an additional insulation layer, serving at the same time as a canal for collecting and draining condensed water, which is drained through openings 7 made on aluminum cover 3. According to test standard EN 10077-2 the embodiment of the window frame, as shown in Figure 1 has, U_{f} = 0,65 W/m²K, which makes this window frame one of the best window frames in the world.

## Claims

1. The external layer of compound frames for windows and doors for fixed frames, consisting of insulation layer (2), of the approximately rectangular cross-section, made of polymer foamy material of uniform density, such as polystyrene or polyurethane, which is fastened to carrier part (1) of the fixed frame, and thin profiled aluminum cover (3) whereby the external surface of layer (2) is covered by vertical aluminum cover (3), which has, on its lower end, a vertical teethed groove, and on its upper end, which is bent towards the frame, groove (4) having the form of horizontally positioned letter T, with the opening facing the frame of wing, and accepting the upper gasket, **characterized in that** on the internal surface of aluminum cover (3), on its upper part, horizontal arm (5) is made, and is slightly bent upwards, having hooked ending (6), and lying on the upper surface of layer (2), and above horizontal arm (5), in aluminum cover (3), openings (7) are made to drain condensed water, and that aluminum cover (3) is fastened to carrier part (1) of the fixed frame at the upper part of layer (2) by means of plastic profile (8), having the form of horizontal bar, the external part of which ends in hooked ending (10), by which plastic profile (8) is connected with hooked ending (6) of aluminum cover (3), the internal side of which ends in vertical teethed ending (11), which is inserted in the upper groove between upper bar (12) or upper snaps (12) and carrier part (1), which are fastened to carrier part (1) of the fixed frame by screws (13), and that aluminum cover (3) is fixed to carrier part (1) of the fixed frame at the lower part of layer (2) by means of plastic bond elements (14) or plastic profile (14), having the form of letter U, with the teethed tops (15) of their external arms inserted in the teethed groove at the lower end of aluminum cover (3), whereas the teethed tops (16) of their internal arms are inserted in the lower groove, between lower bar (12) or lower snaps (12) and carrier part (1) of the fixed frame, that are fastened to carrier part (2) of the fixed frame by screws (13).

2. The external layer of compound frames for windows and doors for fixed frames according to claim 1, **characterized in that** plastic profile (8) of the external layer of the fixed frame has, on its upper side, groove (9), having the form of horizontally positioned letter T, with the opening facing the frame of wing, or the form of letter T turned around 180 degrees, with the opening facing upwards to accept the lower gasket, whereas the fixed frame with such an external layer is used in combination with the movable frame of wing.

3. The external layer of compound frames for windows and doors for fixed frames according to claim 1, **characterized in that** the fixed frame with the external layer, having flat plastic profile (8), without a groove for a gasket is used in combination with the fixed frame of wing.

## Patentansprüche

1. Die Verbundrahmenaussenschicht für Fenster und Türen für unbewegliche Rahmen, bestehend aus einer Isolationsschicht (2), des annähernd rechteckigen Querschnitts, gefertigt aus Polymerschaummaterial einheitlicher Dichte, wie zum Beispiel Polystyren oder Polyurethan, die am Trägerteil (1) des unbeweglichen Rahmens befestigt ist, und einer dünn profilierten Aluminiumabdeckung (3), wobei die Außenfläche der Schicht (2) durch eine vertikale Aluminiumabdeckung (3) abgedeckt ist, die an ihrem unteren Ende eine vertikal verzahnte Nut hat und an ihrem oberen Ende, das in Richtung des Rahmens gebogen ist, eine Nut (4) in Form eines horizontal positionierten Buchstaben T, mit der Öffnung dem Rahmen des Flügels zugewandt und die obere Dichtung aufnehmend, **dadurch gekennzeichnet, dass** am oberen Teil der Innenfläche der Aluminiumabdeckung (3), ein horizontaler Schenkel (5) gefertigt und leicht nach oben gebogen ist, mit einem hakenförmigen Endstück (6) und auf der Oberfläche der Schicht aufliegend (2), und über dem horizontalen Schenkel (5), in der Aluminiumabdeckung (3) sind Öffnungen (7), die zur Ableitung von Kondenswasser dienen und diese Aluminiumabdeckung (3) ist am Trägerteil (1) des unbeweglichen Rahmens am oberen Teil der Schicht (2) befestigt mittels eines Plastikprofils (8)in Form eines horizontalen Stegs, dessen äußerer Teil in einem hakenförmigen Endstück (10) endet, durch welches das Plastikprofil (8) mit dem hakenförmigen Endstück (6) der Aluminiumabdeckung (3) verbunden ist, dessen Innenseite in einem vertikal verzahnten Endstück (11) endet, welches in die obere Nut zwischen dem oberen Steg (12) oder dem oberen Schnapphaken (12) und dem Trägerteil (1) eingebracht ist, durch Schrauben (13) am Trägerteil (1) des unbeweglichen Rahmens befestigt und diese Aluminiumabdeckung (3) ist am Trägerteil (1) des unbeweglichen Rahmens am unteren Teil der Schicht (2) befestigt durch Verbindungselemente aus Plastik (14) oder ein Plastikprofil (14) in Form des Buchstaben U, wobei die verzahnten Spitzen (15) ihrer äußeren Stege in die verzahnte Nut am unteren Ende der Aluminiumabdeckung (3) eingebracht sind, während die verzahnten Spitzen (16) ihrer inneren Stege in die untere Nut eingebracht sind, zwischen dem unteren Steg (12) oder dem unteren Schnapphaken (12) und dem Trägerteil (1) des unbeweglichen Rahmens, durch Schrauben (13) am Trägerteil (2) des unbeweglichen Rahmens befestigt.

2. Die Verbundrahmenaussenschicht für Fenster und Türen für unbewegliche Rahmen nach Anspruch 1, **dadurch gekennzeichnet, dass** das Plastikprofil (8) der Außenschicht des unbeweglichen Rahmens an seiner Oberseite eine Nut (9) in Form eines horizontal positionierten Buchstaben T hat, mit der Öffnung dem Rahmen des Flügels zugewandt, oder die Form eines um 180 Grad gedrehtem Buchstaben T, mit der Öffnung nach oben zeigend, um die untere Dichtung aufnehmen zu können, während der unbewegliche Rahmen mit solch einer Außenschicht in Kombination mit dem beweglichen Rahmen des Flügels verwendet wird.

3. Die Verbundrahmenaussenschicht für Fenster und Türen für unbewegliche Rahmen nach Anspruch 1, **dadurch gekennzeichnet, dass** der unbewegliche Rahmen mit der Außenschicht ein flaches Plastikprofil hat (8), ohne dass eine Nut für eine Dichtung in Kombination mit dem unbeweglichen Rahmen des Flügels verwendet wird.

## Revendications

1. La couche externe des encadrements composites pour fenêtres et portes pour encadrements fixes, consistant de couche d'isolation (2), d'une section transversale approximativement rectangulaire, faite de matériel en mousse polymère de densité uniforme, tel que polystyrène ou polyuréthane, qui est fixée à la pièce porteuse (1) de l'encadrement fixe, et d'un couvercle profilé fin en aluminium (3) où la surface externe de la couche (2) est couverte par un couvercle vertical en aluminium (3), qui a, sur sa partie inférieure, une rainure dentée verticale, et sur sa partie supérieure, qui est courbée vers l'encadrement, une rainure (4) ayant la forme d'un T positionné horizontalement, dont l'ouverture fait face à l'encadrement de l'aile, et qui reçoit le joint supérieur, **caractérisé en ce que** sur la surface interne du couvercle en aluminium (3), sur sa partie supérieure, il y a un bras horizontal (5), et il est légèrement courbé vers le haut, ayant une extrémité crochue (6), et étendues sur la surface supérieure de la couche(2), et au-dessus du bras horizontal (5), dans le couvercle en aluminium (3), des ouvertures (7) sont faits pour drainer l'eau condensée, et ce couvercle en aluminium (3) est fixé à la pièce porteuse (1) de l'encadrement fixe sur la partie supérieure de la couche (2) au moyen d'un profilé en plastique (8), ayant la forme d'une barre horizontale, dont la partie externe se termine par une extrémité crochue (10), par laquelle le profilé en plastique (8) est connecté avec l'extrémité crochue (6) du couvercle en aluminium (3), dont la partie interne se termine en une extrémité dentée verticale (11), qui est insérée dans la rainure supérieure entre la barre supérieure (12) ou les cliquets supérieurs (12) et la pièce porteuse (1), qui est fixée à la pièce porteuse (1) de l'encadrement fixe par des vis(13), et ce couvercle en aluminium (3) est fixé à la pièce porteuse (1) de l'encadrement fixe sur la partie inférieure de de la couche (2) au moyen d'éléments de liaison plastiques (14) ou des profilés en plastique(14), ayant la forme d'un U, aux dessus dentés (15) de leurs bras externes insérés dans la rainure dentée à l'extrémité inférieure du couvercle en aluminium (3), où les dessus dentés (16) de leurs bras internes sont insérés dans la rainure inférieure, entre la barre inférieure (12) ou les cliquets inférieurs (12) et la pièce porteuse (1) de l'encadrement fixe, qui sont fixés à la pièce porteuse (2) de l'encadrement fixe par des vis (13).

2. La couche externe des encadrements composites pour fenêtres et portes pour encadrements fixes selon la revendication 1, est **caractérisée en ce que** le profilé en plastique (8) de la couche externe de l'encadrement fixe a, sur son côté supérieur, une rainure (9), ayant la forme d'un T positionné horizontalement, dont l'ouverture fait face à l'encadrement de l'aile, ou la forme d'un T pivoté de 180 degrés, avec l'ouverture faisant face vers le haut afin de recevoir le joint inférieur, où l'encadrement fixe avec cette couche externe est utilisé en combinaison avec l'encadrement mobile de l'aile.

3. La couche externe des encadrements composites pour fenêtres et portes pour encadrements fixes selon la revendication 1, est **caractérisée en ce que** l'encadrement fixe avec la couche externe, au profilé en plastique plat (8), sans la rainure pour le joint est utilisée en combinaison avec l'encadrement fixe de l'aile.
